# FASCICULE DE BREVET EUROPEEN

(11) **EP 1 181 786 B1**
(45) Date de publication et mention de la délivrance du brevet: **22.10.2003**
(21) Numéro de dépôt: 00927354.1
(22) Date de dépôt: 17.05.2000
(51) Int. Cl.: H04B 7/26, H04Q 7/38

(54) **PROCEDE DE RADIOCOMMUNICATION ENTRE UNE STATION DE BASE ET DES TERMINAUX MOBILES**
VERFAHREN ZUR FUNKÜBERTRAGUNG ZWISCHEN EINER BASISSTATION UND MOBILFUNKENDGERÄTEN
RADIO COMMUNICATION METHOD BETWEEN A BASE STATION AND MOBILE TERMINALS

(30) Priorité: 19.05.1999 FR 9906345
(43) Date de publication de la demande: 27.02.2002
(73) Titulaire: Eads Telecom, 78180 Montigny Le Bretonneux (FR)
(72) Inventeur: MARQUE-PUCHEU, Gérard, F-78480 Verneuil-sur-Seine (FR); METAIS, Jean-Pierre, F-78370 Plaisir (FR)
(74) Mandataire: Verdure, Stéphane
(86) Numéro de dépôt international: FR0001324
(87) Numéro de publication internationale: WO00072473

(56) Documents cités:
- EP-A- 0 480 505
- EP-A- 0 644 702
- EP-A- 0 677 930
- EP-A- 0 896 443
- WO-A-96/10895

## Description

La présente invention concerne le domaine des radiocommunications numériques entre des stations de base et des terminaux mobiles, utilisant un duplexage fréquentiel de canaux logiques de trafic.

Elle vise notamment des applications en radiocommunication professionnelle.

Dans un système de radiotéléphonie, les terminaux mobiles doivent être capables de recevoir de la signalisation alors qu'un appel est établi sur un canal de trafic, afin d'échanger des informations relatives aux services offerts aux terminaux ou à la gestion des liaisons radio.

Dans les systèmes cellulaires à duplexage fréquentiel tels que le GSM, des canaux de signalisation appelés SACCH sont associés aux canaux de trafic. Ils utilisent les mêmes fréquences porteuses que les canaux de trafic, par un mécanisme de multiplexage temporel. Ces canaux de signalisation, comme leurs canaux de trafic associés sont en mode de duplex total.

Ceci n'est pas bien adapté aux besoins des systèmes de radiocommunication professionnelle, qui fonctionnent fréquemment en alternat, et pour lesquelles les communications de groupe jouent un rôle très important. Dans un tel système, une solution connue consiste à prévoir une paire de fréquences de contrôle communes à tous les terminaux desservis par une station de base, sur lesquelles les terminaux mobiles en communication basculent périodiquement pour les besoins des canaux de signalisation associés. Cette solution n'est pas d'une grande souplesse. En outre, elle impose un synchronisme entre les trames de trafic et les trames de contrôle, ce qui présente l'inconvénient d'interdire les mécanismes de scrutation et de présynchronisation qui permettent une meilleure gestion des ressources radio, notamment par la mise en oeuvre efficace de transferts intercellulaires (handovers).

La demande de brevet EP-A-0 896 443 décrit un système de radiocommunication avec des terminaux mobiles présentant la particularité d'offrir des services à multiplexage temporel avec différents degrés de protection liés à l'emploi éventuel d'une modulation codée sur la porteuse. Pour un débit donné, offert pour la réalisation du service, le nombre d'intervalles de temps alloués au service est lié au codage ou à l'absence de codage de la modulation, et/ou au rendement du codage appliqué. Dans une réalisation particulière de ce système, un même service peut être offert dans un premier mode sur un demi-canal avec une modulation non codée, ou dans un second mode sur un plein canal avec une modulation codée par un code de rendement 1/2.

La demande de brevet EP-A-0 677 930 décrit un système de radiocommunication à multiplexage fréquentiel dans lequel une fréquence porteuse supporte un signal radio organisé en multitrames comportant des trames de trafic et des trames de signalisation, montante ou descendante, réservées aux stations mobiles en mode d'émission.

La demande de brevet EP-A-0 644 702 décrit un système de radiocommunication à multiplexage temporel dans lequel des intervalles de temps de trames décalées entre la liaison montante et la liaison descendante supportent des canaux logiques de signalisation, montante ou descendante, pour des stations mobiles en mode d'émission ou de réception.

La présente invention a pour but de proposer une organisation de canaux de signalisation associés qui réponde bien aux besoins des systèmes de radiocommunication professionnelle.

L'invention propose ainsi un procédé de transmission de signaux radio entre une station de base et des terminaux mobiles, sur une première fréquence pour des signaux transmis de la station de base vers au moins un des terminaux mobiles et sur une seconde fréquence pour des signaux transmis d'au moins un des terminaux mobiles vers la station de base, les transmissions sur les première et seconde fréquences étant effectuées suivant une structure de trame comportant des intervalles de temps de même durée. La première fréquence supporte un canal logique de trafic descendant vers au moins un des terminaux mobiles, tandis que la seconde fréquence supporte un canal logique de trafic montant depuis un des terminaux mobiles. La première fréquence supporte en outre un premier canal logique de signalisation descendante vers un des terminaux mobiles en phase d'émission sur le canal logique de trafic montant, et un second canal logique de signalisation descendante vers au moins un des terminaux mobiles en phase de réception sur le canal logique de trafic descendant. La seconde fréquence supporte en outre un premier canal logique de signalisation montante depuis au moins un des terminaux mobiles en phase de réception sur le canal logique de trafic descendant, et un second canal logique de signalisation montante depuis un des terminaux mobiles en phase d'émission sur le canal logique de trafic montant. Les premiers canaux logiques de signalisation descendante et montante sont chacun supportés par un premier intervalle de temps de la structure de trame, tandis que les seconds canaux logiques de signalisation descendante et montante occupent chacun un second intervalle de temps de la structure de trame, distinct dudit premier intervalle.

Dans un mode d'exécution particulier du procédé, la structure de trame comprend des intervalles de temps consacrés aux canaux logiques de trafic, au moins un intervalle de temps consacré aux canaux logiques de signalisation, et au moins un intervalle de temps formant pour les terminaux mobiles une fenêtre d'écoule de signaux transmis depuis d'autres stations de base.

De préférence la structure de trame comprend un intervalle de temps programmable prévu pour la transmission sur au moins le premier canal logique de signalisation montante la station de base émettant, au cours des intervalles de temps consacres aux canaux logiques de trafic, des signaux de contrôle d'accès audit intervalle de temps programmable par les terminaux mobiles en phase de réception On peut ainsi ajuster selon les besoins le débit des canaux de signalisation descendant et montant entre la station de base et les terminaux en phase de reception sur le canal de trafic. Les signaux de contrôle d'accès peuvent comprenare des signaux pour autoriser les terminaux mobiles en phase de réception a emettre au cours d'un prochain intervalle de temps programmable, et des signaux pour rendre compte du traitement de requêtes effectuées par les terminaux mobiles en phase de réception au cours d'un précédent intervalle de temps programmable

Lorsque les canaux logiques de trafic sont utilisés en mode d'alternat, avec des alternances successives au cours desquelles un seul des terminaux mobiles est en phase d'émission sur le canal logique de trafic montant alors qu'un ou plusieurs des terminaux mobiles sont en phase de réception sur le canal logique de trafic descendant. la station de base peut émettre des signaux de contrôle d'accès de manière à restreindre les émissions des terminaux mobiles au cours des intervalles de temps programmables dans une période initiale d'une alternance par rapport à la suite de l'alternance.

Un autre aspect de la présente invention se rapporte à une station de base de radiocommunication, comprenant des moyens d'émission et de réception de signaux radio, ayant la structure ci-dessus en ce qui concerne les canaux logiques de trafic et de signalisation associés.

Un troisième aspect de la présente invention se rapporte à un terminal mobile de radiocommunication, comprenant des moyens d'émission et de réception de signaux radio, ayant la structure ci-dessus en ce qui concerne les canaux logiques de trafic et de signalisation associés.

D'autres particularités et avantages de la présente invention apparaîtront dans la description ci-après d'exemples de réalisation non limitatifs, en référence aux dessins annexés, dans lesquels :
- la figure 1 est un schéma synoptique d'un exemple de station de base selon l'invention ;
- la figure 2 est un schéma synoptique d'un exemple de terminal mobile selon l'invention ;
- la figure 3 est un diagramme illustrant la structure de trames transmises sur des canaux physiques de contrôle formés dans un exemple de réalisation de l'invention ;
- les figures 4 et 5 sont des diagrammes illustrant respectivement deux structures de trames transmises sur des canaux de trafic formés dans un exemple de réalisation de l'invention ;
- les figures 6 et 7 sont des diagrammes détaillant les structures respectives de deux intervalles de temps de la trame de la figure 3 ;
- la figure 8 est un diagramme illustrant une variante de structure de trames transmises sur des canaux physiques de contrôle ;
- les figures 9 et 10 sont des diagrammes détaillant les structures respectives de deux intervalles de temps de la trame de la figure 8 ; et
- la figure 11 est un diagramme illustrant une autre variante de structure de trames transmises sur des canaux physiques de contrôle.

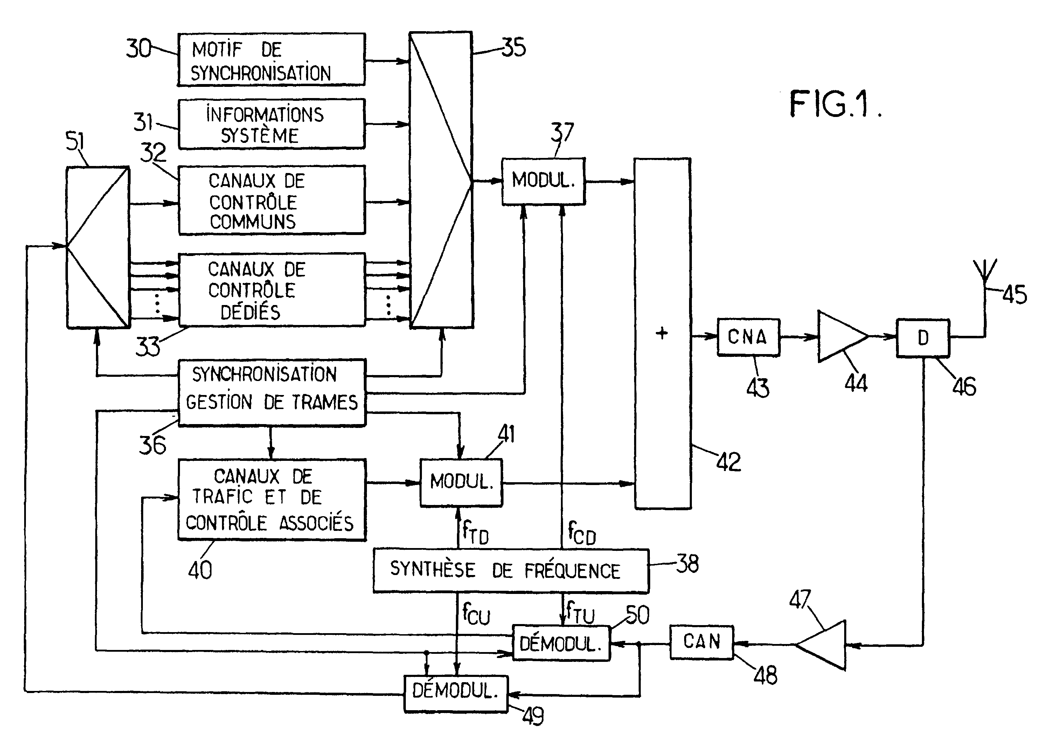

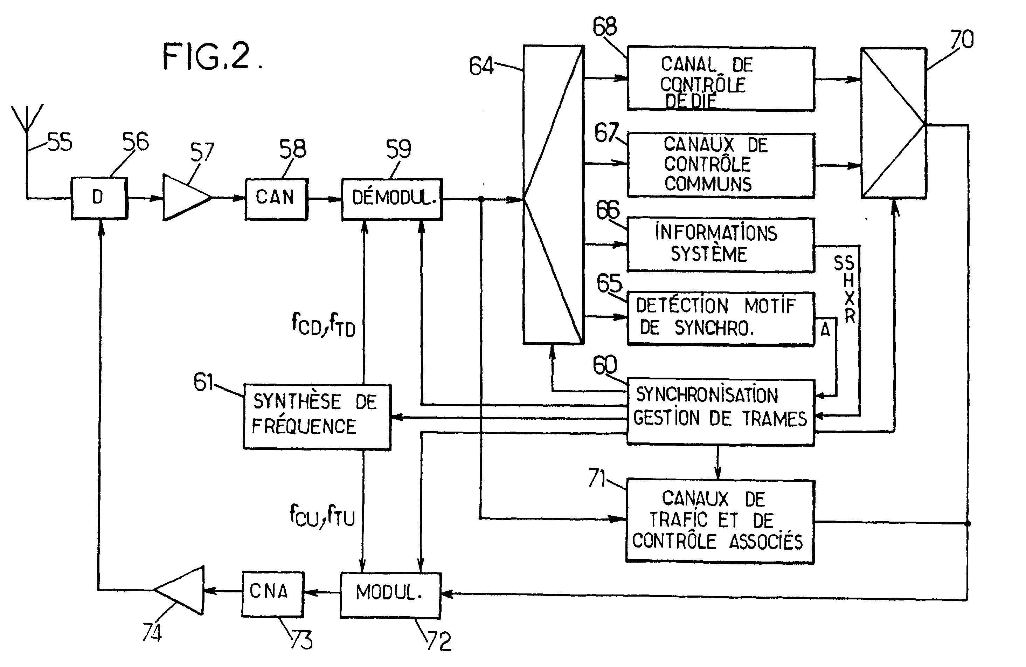

Dans la réalisation décrite ici à titre d'exemple, la station de base et le terminal mobile représentés sur les figures 1 et 2 appartiennent à un système de radiocommunication professionnelle fonctionnant en accès multiple à répartition en fréquence (FDMA). On suppose, à titre d'illustration, que ce système met en oeuvre la méthode de définition de canaux décrite dans la demande de brevet EP-A-0 896 443 précitée, utilisant pour un même service soit un plein canal avec une modulation codée par un code de rendement 1/K (mode 2), soit un canal fractionnaire de débit K fois plus faible avec une modulation non codée (mode 1), avec K = 2. On prend alors en considération des intervalles de temps élémentaires, dont la durée d₁ est par exemple de 20 ms, utilisés dans le mode 1, et des intervalles de temps composites, dont la durée d₂ = K.d₁ est dans cet exemple de 40 ms, utilisés dans le mode 2.

Pour chaque station de base est défini, sur une fréquence particulière f_{CD}, un canal physique descendant consacré à l'émission d'informations de contrôle. Symétriquement, un canal physique montant est défini sur une fréquence f_{CU} pour la transmission d'informations de contrôle des terminaux mobiles vers la station de base. Ces canaux physiques de contrôle sont subdivisés en canaux logiques de contrôle par multiplexage temporel. Certains de ces canaux logiques sont des canaux communs, partagés par les terminaux mobiles à portée de la station de base. D'autres sont des canaux dédiés, que la station de base utilise pour communiquer avec des mobiles particuliers.

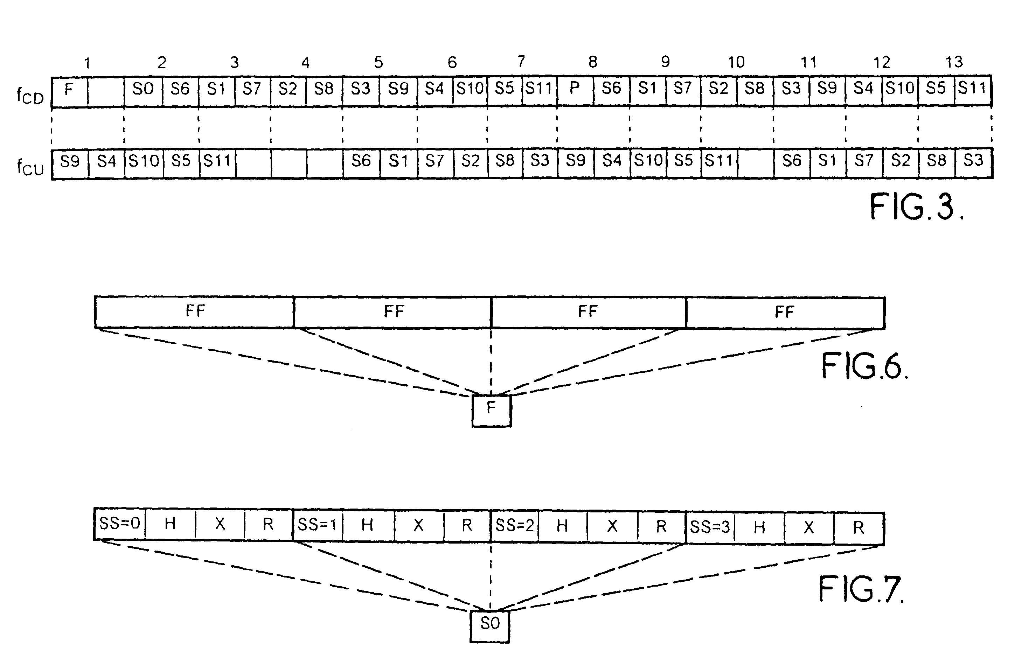

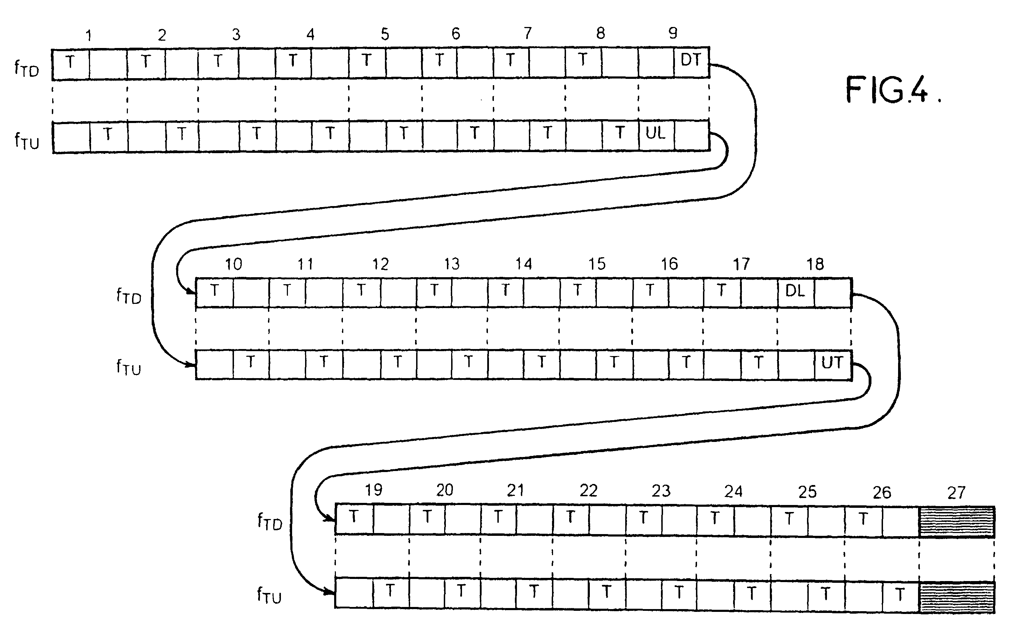

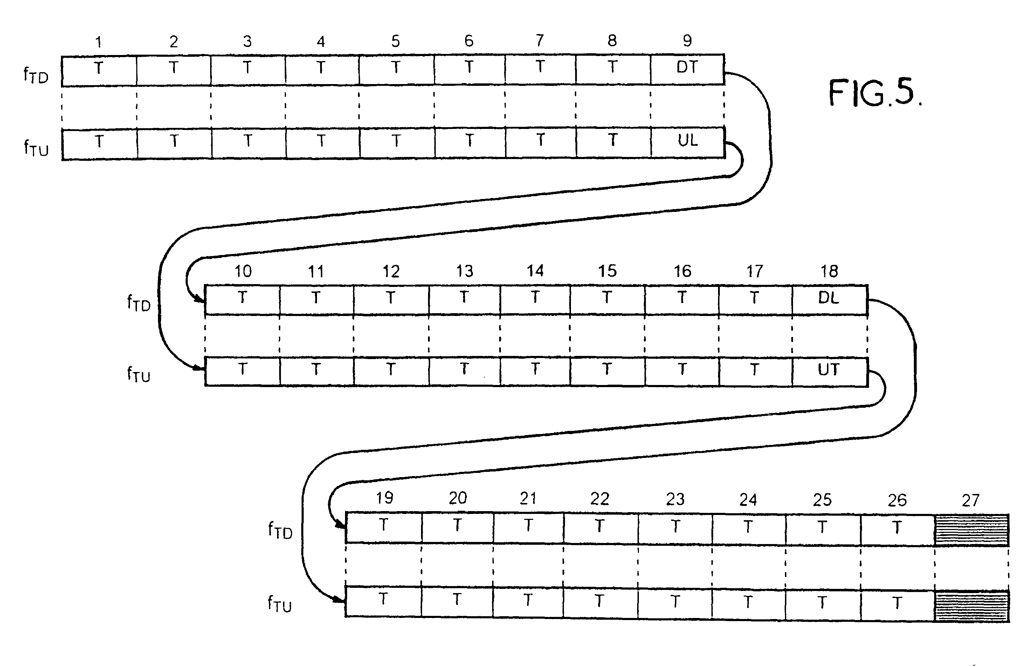

Le signal transmis sur chacun des canaux physiques de contrôle se présente sous forme de trames successives subdivisées en K.M intervalles de temps élémentaires appartenant à des canaux logiques différents. Dans l'exemple illustré par la figure 3, où M = 13, les intervalles élémentaires notés F, S0 et P se rapportent à des canaux communs descendants, et ceux notés Si (avec 1 ≤ i ≤ 11) se rapportent à des canaux dédiés bidirectionnels.

Les intervalles F ont une durée d₁' et sont répétés tous les K'.M intervalles de temps élémentaires, avec d₁' = d₁ et K' = K = 2 dans l'exemple de la figure 3. Ils contiennent un motif de synchronisation formé par une séquence prédéterminée de bits permettant de réaliser la synchronisation fréquentielle et temporelle des terminaux mobiles.

Les intervalles S0 ont une durée d₁' et sont répétés tous les K'.M intervalles de temps élémentaires. Ils contiennent des informations système nécessaires à la coordination entre les mobiles et la station de base, comprenant par exemple : (i) un champ H de 5 bits repérant la position de l'intervalle de temps S0 dans la supertrame courante (une supertrame représente le plus petit commun multiple entre la périodicité des canaux de trafic et celle des canaux de contrôle, soit 13×27 intervalles de temps composites dans l'exemple considéré, c'est-à-dire 14,04 s) ; (ii) un champ X de 3 bits repérant la position de l'intervalle de temps S0 dans une période plus longue (hypertrame), telle qu'une période de chiffrement de l'interface air (typiquement de l'ordre d'une heure) ; et (iii) un champ R de 3 bits indiquant le niveau minimal de champ reçu pour l'accès à la cellule (par exemple quantifié par paliers de 5 dB).

Les intervalles P servent à la station de base pour adresser des messages à des terminaux mobiles avec lesquels elle n'est pas en train de communiquer (paging). Dans le sens montant, les intervalles de temps élémentaires laissés vierges sur la figure 3, ou ceux notés Si (1≤i≤11) qui ne sont pas alloués en tant que canaux dédiés, peuvent être utilisés par les terminaux mobiles pour effectuer des accès aléatoires (canal commun montant).

Les intervalles Si (1 ≤ i ≤ 11) des canaux dédiés sont utilisés après une procédure d'attribution. Ils surviennent chacun deux fois par trame dans l'exemple considéré. La trame de contrôle étant de 520 ms, un intervalle de temps Si, pour i donné, intervient en moyenne toutes les 260 ms, avec une durée de 100 ms entre l'émission d'un message par la station de base sur un intervalle Si descendant et l'émission de la réponse par le terminal mobile sur le prochain intervalle Si montant, et une durée de 140 ms ou 180 ms entre l'émission d'un message par le terminal mobile sur un intervalle Si montant et l'émission de la réponse par la station de base sur le prochain intervalle Si descendant.

La station de base peut en outre établir des canaux de trafic avec un ou plusieurs terminaux mobiles situés à sa portée, après une procédure d'établissement effectuée au moyen d'un canal de contrôle dédié Si. Le canal de trafic établi avec un terminal est descendant (fréquence f_{TD}) et/ou montant (fréquence f_{TU}). Le canal de trafic est multiplexé sur la fréquence f_{TD} et/ou f_{TU} avec des canaux de signalisation associés servant à échanger de la signalisation en cours de communication (par exemple mesures ou commandes pour le contrôle de la puissance radio émise par les mobiles, signalisation d'appel, requêtes et commandes de changement de cellule, de préemption d'alternat, etc.).

Les canaux de trafic montant et descendant peuvent avoir la structure de trame représentée sur la figure 4 correspondant au mode 1, ou celle représentée sur la figure 5 correspondant au mode 2. Chaque trame du canal de trafic a une durée correspondant à K.Q = 54 intervalles de temps élémentaires (Q = 27), et est divisée en trois parties de 18 intervalles élémentaires. Dans chacune de ces trois parties, les huit premiers intervalles de temps composites sont occupés par le canal logique de trafic. Le neuvième intervalle de temps composite est occupé par des canaux de contrôle associés pour les deux premières parties, et inoccupé pour la troisième partie. Cet intervalle inoccupé, hachuré sur les figures 4 et 5, constitue une fenêtre de scrutation pendant laquelle le terminal mobile change de fréquence pour observer les canaux physiques de contrôle des stations de base des cellules voisines, afin de pouvoir effectuer un changement de cellule si nécessaire.

Dans le mode 1 illustré par la figure 4, chacun des huit premiers intervalles de temps composites de chaque tiers de la trame comporte un intervalle élémentaire impair pour le sens descendant et un intervalle élémentaire pair pour le sens montant, repérés par la lettre T sur la figure. En conséquence, sur la même porteuse descendante f_{TD}, la station de base peut multiplexer un canal logique de trafic établi avec un autre terminal mobile. En outre, si le terminal mobile est capable de passer de la fréquence f_{TD} à la fréquence f_{TU} et vice-versa dans le court laps de temps séparant deux intervalles élémentaires, le mode 1 permet d'établir la communication en duplex temporel.

Dans le mode 2 illustré par la figure 5, les intervalles de temps composites des trames transmises sur les canaux de trafic ne sont pas subdivisés en deux intervalles élémentaires. Le signal, transmis avec le même débit d'information, fait l'objet d'une modulation codée avec un rendement de 1/K = 1/2 comme exposé dans la demande de brevet EP-A-0 896 443, ce qui procure une meilleure sensibilité au récepteur. Avec ce mode de fonctionnement, le duplex temporel précédemment décrit ne peut pas être utilisé. Dans le cas général où les terminaux mobiles ne sont pas capables de moduler et de démoduler simultanément autour de deux fréquences porteuses différentes, ce mode de fonctionnement impose une discipline de communication de type alternat.

Dans la fenêtre de scrutation d'une trame de trafic, le terminal mobile cherche à détecter le motif de synchronisation émis dans l'intervalle de temps F de la trame de contrôle par la station de base d'une cellule voisine. Il démodule donc le signal reçu selon la fréquence f_{CD} utilisée dans cette cellule voisine. Si le motif de synchronisation est détecté, le terminal utilise la même fréquence f_{CD} dans la fenêtre de scrutation d'une trame suivante, et cherche à extraire les informations système émises par la même station de base dans son intervalle S0. Si ces informations sont bien reçues, le terminal mobile est prêt à changer de cellule si nécessaire.

La fenêtre de scrutation a une durée d₂ correspondant à un intervalle de temps composite, soit K = 2 intervalles élémentaires. Pour être sûr qu'au cours d'une supertrame, ces fenêtres couvrent les intervalles de temps F et S0 des trames de contrôle descendantes des cellules voisines, il est judicieux que la périodicité de ces fenêtres temporelles, et celle des intervalles de temps F et S0 sur le canal physique de contrôle, exprimées en nombre d'intervalles de temps composites, soient premières entre elles. En d'autres termes, la périodicité des fenêtres de scrutation étant de Q intervalles composites, et celle des intervalles de temps F et S0 étant de M intervalles composites, on choisit les nombres M et Q premiers entre eux, ce qui est le cas dans la réalisation décrite où M = 13 et Q = 27. Le terminal mobile scrute alors les différentes fréquences f_{CD} possibles au rythme des supertrames, jusqu'à détecter le motif de synchronisation émis dans une cellule voisine.

En outre, l'intervalle de temps S0 intervenant p intervalles composites après l'intervalle de temps F sur la porteuse f_{CD}, avec p < M (p = 1 dans l'exemple de la figure 3), il est judicieux de choisir l'entier Q de la forme q.M+p, avec q entier. Cette condition est remplie dans l'exemple décrit où p = 1, q = 2, M = 13 et Q = 27. De ce fait, lorsque le terminal mobile capte le motif de synchronisation émis par une cellule dans une fenêtre de scrutation, il peut capter les informations système émises par cette même cellule dès la fenêtre de scrutation suivante, ce qui minimise la durée du processus d'acquisition.

Sur la figure 1, le bloc 30 désigne la source du motif de synchronisation émis dans les intervalles F. et le bloc 31 la source des informations système émis dans les intervalles S0. Le bloc 32 schématise les circuits servant à traiter les informations échangées sur les autres canaux de contrôle communs, notamment de paging et d'accès aléatoire. Le bloc 33 schématise les circuits consacrés aux traitements et échanges d'informations sur les canaux de contrôle dédiés S1-S11 établis avec différents terminaux mobiles dans la cellule. Un multiplexeur 35 reçoit les signaux délivrés par les blocs 30 à 33 et construit les trames descendantes représentées à la partie supérieure de la figure 3 sous le contrôle d'un module 36 de synchronisation et de gestion des trames. Le flux de sortie du multiplexeur 35 est fourni à un modulateur 37 qui procède à la modulation autour de la fréquence porteuse f_{CD} fournie par le module de synthèse de fréquence 38.

Pour la réception sur le canal de contrôle, la station de base comporte un démodulateur 49 qui démodule le signal reçu relativement à la fréquence porteuse f_{CU} fournie par le module 38, et délivre au démultiplexeur 51 les trames binaires descendantes ayant la structure représentée à la partie inférieure de la figure 3. Sous le contrôle du module 36 de synchronisation et de gestion des trames, le démultiplexeur 51 extrait les informations pertinentes pour les canaux de contrôle communs 32 et les canaux de contrôle dédiés 33.

En plus du canal physique de contrôle, la station de base peut établir un certain nombre de canaux de trafic avec des terminaux mobiles situés à sa portée. Dans l'exemple simplifié représenté sur la figure 1, on considère que la station de base utilise une seule fréquence de trafic f_{TD} dans le sens descendant et une seule fréquence de trafic f_{TU} dans le sens montant, le bioc 40 désignant les circuits, supervisés par le module 36, servant aux traitements et échanges sur ces canaux de trafic et sur les canaux de contrôle associés.

Un modulateur 41 module le signal numérique produit par le bloc 40, qui a la structure représentée à la partie supérieure de la figure 4 ou 5, autour de la fréquence porteuse f_{TD} délivrée par le module 38 de synthèse de fréquence. Un démodulateur 50 reçoit du module de synthèse 38 la fréquence f_{TU} du canal de trafic montant. Le signal numérique résultant, qui a la structure représentée à la partie inférieure de la figure 4 ou 5, est adressé aux circuits 40 de traitement du canal de trafic.

Lorsqu'un canal de trafic a été alloué, le module 36 de synchronisation et de gestion des trames commande le modulateur 41 et le démodulateur 50 afin d'activer le codage de la modulation et la prise en compte du schéma de démodulation correspondant seulement si le mode 2 est requis (figure 5).

En pratique, pour assurer l'accès multiple, la station de base comportera plusieurs modulateurs 41 et plusieurs démodulateurs 50 fonctionnant suivant les différentes fréquences de trafic.

Les signaux radio délivrés par les modulateurs 37 et 41 sont combinés par le sommateur 42. Le signal qui en résulte est converti en analogique en 43, puis amplifié en 44 avant d'être émis par l'antenne 45 de la station de base. Un duplexeur 46 extrait le signal radio capté par l'antenne 45 de la station de base, et le fournit à un amplificateur 47. Après numérisation 48, le signal reçu et amplifié est fourni aux démodulateurs 49 et 50.

Un terminal mobile communiquant avec la station de base ci-dessus peut être conforme au schéma synoptique de la figure 2. L'antenne 55 est reliée à un duplexeur 56 pour séparer les signaux émis et reçus. Le signal reçu est amplifié en 57, puis numérisé en 58 avant d'être adressé au démodulateur 59. Le terminal mobile comprend un module 60 de synchronisation et de gestion des trames, qui commande le module 61 de synthèse de fréquence pour qu'il fournisse au démodulateur 59 soit la fréquence f_{CD} d'un canal physique de contrôle, soit la fréquence f_{TD} d'un canal de trafic descendant alloué au terminal.

Lorsque le démodulateur 59 fonctionne à la fréquence f_{CD}, les trames de signal numérique qui peuvent avoir la structure représentée à la partie supérieure de la figure 3 sont adressées a un démultiplexeur 64 commandé par le module de synchronisation 60 pour distribuer les signaux relevant des différents canaux logiques aux blocs 65 66 67, 68 qui désignent les circuits respectivement utilisés pour détecter les motifs de synchronisation sur le canal logique F, pour extraire les informations de système du canal logique S0, pour traiter les canaux de contrôle communs et pour traiter le canal de contrôle dédié Si éventuellement alloue au terminal Le module 60 de synchronisation et de gestion des trames commande également un multiplexeur 70 qui forme la contribution du terminal aux trames montantes à la fréquence f_{CU} (partie inférieure de la figure 3)

Lorsqu'un canal de trafic est alloue le démodulateur 59 fonctionne à la fréquence f_{TD} (sauf dans les fenêtres de scrutation), et son signal de sortie est adressé aux circuits 71 qui traitent le canal de trafic et les canaux de contrôle associés (réception des canaux DT. DL des figures 4 et 5). Ces circuits 71 délivrent en outre le flux à transmettre sur la fréquence f_{TU}, représenté sur la figure 4 ou 5 (canal de trafic et canaux associés UL, UT).

Le modulateur 72 du terminal mobile contrôlé par le module 60, reçoit ou bien le flux délivré par le multiplexeur 70 et la fréquence f_{CU} pour l'émission sur le canal physique de contrôle ou bien le flux délivré par les circuits 71 et la fréquence f_{TU} pour l'émission sur le canal de trafic. Le signal radio de sortie du modulateur 72 est converti en analogique en 73, en amplifié en 74 avant d'être émis par l'antenne 55.

Lorsqu'un canal de trafic a été alloué, le module 60 de synchronisation et de gestion des trames commande le modulateur 72 et le démodulateur 59 afin d'activer le codage de la modulation et la prise en compte du schéma de démodulation correspondant seulement si le mode 2 est requis (figure 5).

Dans les fenêtres de scrutation, le module 60 de synchronisation et de gestion des trames du terminal indique au module de synthèse de fréquence 61 la fréquence f_{CD} à fournir au démodulateur 59, distincte de la fréquence f_{CD} de la station de base de desserte. Il commande en outre le démultiplexeur 64 pour que le signal démodulé soit adressé au bloc 65 de détection du motif de synchronisation. Si le motif de synchronisation n'est pas détecté, le module 60 répète le même processus au cours de la prochaine fenêtre de scrutation, jusqu'à ce que la même fréquence f_{CD} ait été scrutée M fois. Quand le motif de synchronisation est détecté dans une fenêtre de scrutation (données A sur la figure 2), le module 60 fait maintenir la même fréquence f_{CD} au cours de la prochaine fenêtre, et il commande le démultiplexeur 64 pour que le signal démodulé soit adressé au bloc 66 d'extraction des informations système.

Un terminal mobile compatible avec le mode de fonctionnement de la figure 4, avec le duplex temporel, doit avoir un module 60 de synthèse de fréquence capable de fournir deux fréquences différentes f_{TD}, f_{TU} à des instants très rapprochés aux frontières entre les intervalles de temps élémentaires. En pratique, ceci requiert que le module 60 comporte deux synthétiseurs de fréquence distincts, ce qui a un impact significatif sur le coût du terminal.

Une version simplifiée du terminal ne permet pas une alternance entre les fréquences f_{TD} et f_{TU} entre les intervalles de temps élémentaires. Ce terminal simplifié fonctionne seulement en alternat, la relative lenteur de commutation de fréquence ne posant pas de problème au moment des alternances.

Toutefois, dans la fenêtre de scrutation de chaque trame, le module de synthèse 60 doit être capable de commuter sa fréquence pour examiner les canaux physiques de contrôle des cellules voisines. Lorsque l'intervalle de temps F d'une cellule voisine tombe dans la fenêtre de scrutation du terminal mobile réglé sur la fréquence du canal de contrôle de cette cellule voisine, le terminal risque de manquer la détection du motif de synchronisation en raison de sa relative lenteur de commutation de fréquence et/ou de l'absence de synchronisation entre les cellules.

Pour éviter cela, l'intervalle de temps élémentaire F est subdivisé en N sous-intervalles de même durée au cours desquels le motif de synchronisation FF est émis de façon répétitive. Ces sous-intervalles sont appelés ici « intervalles de présynchronisation ». A titre d'exemple, on peut prendre N = 4, la durée des intervalles de présynchronisation étant de d₁'/N = 5 ms (voir figure 6). Le motif de synchronisation FF pourra alors être détecté même si le terminal mobile manque la démodulation du début de l'intervalle de temps F.

La synchronisation qu'on est ainsi capable de réaliser est incomplète en ce sens qu'on ignore laquelle des N occurrences du motif de synchronisation a été détectée.

Cette synchronisation incomplète permet néanmoins d'effectuer le calage fréquentiel du module de synthèse 61 du terminal et de positionner le terminal mobile sur la structure des trames de contrôle de la cellule voisine, avec un décalage de k.d₁'/N, où k est un entier inconnu compris entre 0 et N-1. En revenant sur la même fréquence de contrôle f_{CD} avec un retard de Q intervalles de temps composites par rapport à l'instant de début du motif de synchronisation détecté, la fenêtre de scrutation de la trame suivante permettra de capter une partie au moins de l'intervalle de temps S0 contenant les informations système.

La station de base subdivise également cet intervalle de temps élémentaire S0 en N sous-intervalles de même durée d₁'/N contenant chacun, outre les champs H, X et R précités, un champ SS de n bits, où n est l'entier égal ou immédiatement supérieur à log₂N (n = 2 dans l'exemple considéré). Ces n bits contiennent le numéro d'ordre du sous-intervalle dans l'intervalle de temps S0, soit SS = 0, 1, ..., N-1 (figure 7). Les champs H, X et R contiennent les mêmes valeurs dans les différents sous-intervalles du même intervalle S0. Ces N sous-intervalles de l'intervalle S0 sont appelés ici « intervalles de complément de synchronisation ».

Un décalage fixe de d₂ intervient entre chaque intervalle de présynchronisation et un intervalle de complément de synchronisation qui lui est associé.

Le bloc 66 du terminal mobile extrait les informations système (champs H, X, R) dans l'une de leurs occurrences, calée temporellement par rapport à l'occurrence du motif de synchronisation précédemment détectée. Il obtient en outre le numéro d'ordre SS de cette occurrence, et la fournit au module 60 de synchronisation et de gestion des trames avec le contenu des champs H, X et R. Ce numéro d'ordre SS permet au module 60 de déterminer l'entier k précité et de lever l'incertitude qu'il y avait dans la synchronisation temporelle effectuée sur la seule base de la détection du motif de synchronisation FF. Ayant ainsi complété la synchronisation, le terminal mobile est prêt à changer de cellule si cela est nécessaire.

Si on considère par exemple qu'il faut 5 ms au terminal pour changer sa fréquence, la fenêtre de scrutation de durée d₂ = 40 ms est amputée de 5 ms au début et à la fin. Etant donné que, dans l'exemple de la figure 3, le motif de synchronisation recherché FF se trouve dans un intervalle F de d₁' = 20 ms modulo une périodicité multiple de 40 ms sans synchronisme par rapport au rythme des trames sur lequel le terminal est réglé, la durée de l'intervalle de présynchronisation contenant ce motif FF est d'au plus 5 ms si on veut garantir sa détection. Ceci justifie le choix N = 4 dans le cas considéré.

Si les cellules étaient synchronisées, seul le temps de commutation étant à prendre en compte, la durée de l'intervalle de présynchronisation pourrait aller jusqu'à 10 ms (N = 2). Mais ce type de synchronisation n'est pas employé usuellement car il pose des problèmes d'architecture du réseau.

En prévoyant que le motif FF soit présent dans tous les sous-intervalles de l'intervalle F comme représenté sur la figure 6, on maximise sa probabilité de détection. Mais il est à noter que, dans l'exemple de la figure 3, seuls le premier et le dernier sous-intervalles de 5 ms de l'intervalle F pourraient jouer le rôle d'intervalles de présynchronisation contenant le motif de synchronisation FF, les deux autres sous-intervalles pouvant contenir autre chose. Ceci suffit à assurer que le motif FF pourra être détecté par les terminaux mobiles. Dans ces conditions, seuls le premier et le dernier sous-intervalles de l'intervalle S0 pourraient, de façon semblable, jouer le rôle d'intervalles de complément de synchronisation contenant les informations système. Il suffit alors d'un bit dans les intervalles de complément de synchronisation pour identifier duquel il s'agit et permettre de compléter la synchronisation.

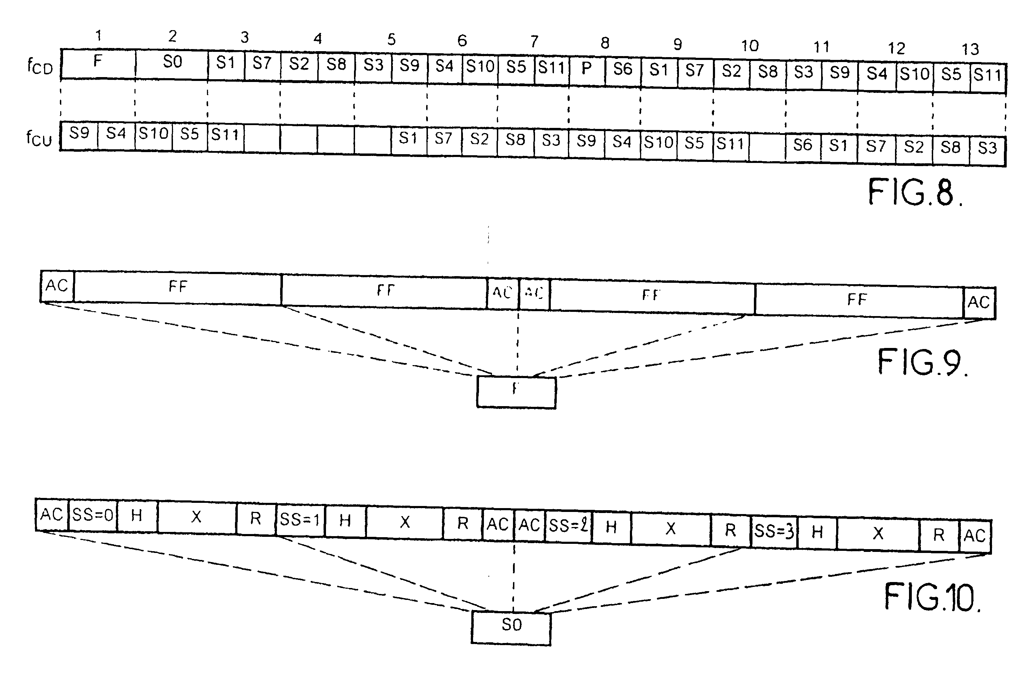

Dans une variante du procédé, la durée d₁' des intervalles de temps F et S0 est de 40 ms, leur rythme de répétition étant le même que précédemment, à savoir M x d₂ = 520 ms. En d'autres termes, K' = d₂/d₁' = 1. Par exemple, dans certaines réalisations, les intervalles de temps F, P et Si (i≥0) ne sont pas partagés en deux sur les canaux physiques de contrôle (porteuses f_{CD} et f_{CU}), c'est-à-dire qu'il n'y a pas le multiplexage temporel d'ordre 2 sur ces porteuses. Les canaux de contrôle peuvent également avoir une structure telle que schématisée sur la figure 8, qui est semblable à celle représentée sur la figure 3 avec les différences suivantes :
- les intervalles de temps F et S0 sont de d₁' = d₂ = 40 ms, alors que les intervalles Si avec 1 ≤ i ≤ 11 restent de d₁ = 20 ms ;
- le canal logique formé par les intervalles notés S6 a un débit réduit de moitié.

Les intervalles de temps F et S0 de 40 ms peuvent alors être subdivisés en N = 4 sous-intervalles de 10 ms, ce qui assure la détection du motif FF avec un temps de commutation de fréquence de 5 ms pour les terminaux mobiles, sans synchronisme entre les cellules.

Ceci permet de transmettre plus d'information dans le canal logique S0. En particulier, on peut allonger le champ X pour permettre des périodes de chiffrement plus longues (par exemple 24 à 48 heures), ou l'indication d'un indice de clé de chiffrement ou d'un algorithme de chiffrement à utiliser.

On peut observer que seuls les sous-intervalles de 10 ms de rangs 1 et 3 (ou 2 et 4) des intervalles F et S0 pourraient dans ce cas être des intervalles de présynchronisation et de complément de synchronisation portant respectivement le motif FF et les informations système, les deux autres sous-intervalles pouvant contenir autre chose.

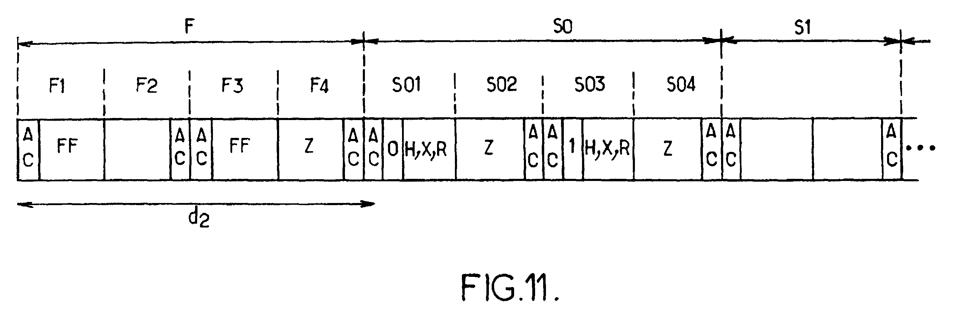

Les figures 9 et 10 illustrent une structure possible des intervalles F et S0 de 40 ms, subdivisés en N = 4 sous-intervalles de 10 ms. Dans cet exemple, où le motif de synchronisation FF est de 9,5 ms, chaque sous-intervalle de l'intervalle F ou S0 comporte une tranche de 0,5 ms consacrée à un canal logique de contrôle d'accès AC. Le premier et le troisième sous-intervalles de l'intervalle F sont des intervalles de présynchronisation commençant par la tranche de 0,5 ms du canal AC suivie par le motif FF, alors que le second et le quatrième sous-intervalles de l'intervalle F sont des intervalles de présynchronisation commençant par le motif FF suivi par la tranche de 0,5 ms du canal AC. De même, le premier et le troisième sous-intervalles de complément de synchronisation commencent par la tranche de 0,5 ms du canal AC suivie par les champs SS = 0 ou 2, H, X, R qui occupent 9,5 ms, alors que le second et le quatrième sous-intervalles de complément de synchronisation commencent par les champs SS = 1 ou 3, H, X, R suivis par la tranche de 0,5 ms du canal AC.

Les autres intervalles de temps (P, Si avec 1≤i≤11) du canal physique de contrôle sur la fréquence f_{CD}, qui sont de d₁ = 20 ms (figure 8), comprennent chacun deux tranches de 0,5 ms consacrées au canal AC, situées l'une au début et l'autre à la fin de l'intervalle. Leurs dispositions sont donc les mêmes que dans les deux moitiés des intervalles F et S0. Dans chacun de ces intervalles P, Si, les données utiles, s'il y en a, occupent par exemple une plage centrale de 17,5 ms encadrée par deux mots de synchronisation de 0,75 ms (qui permettent aux terminaux de poursuivre la synchronisation avec leur cellule de desserte) et par les deux tranches AC de 0,5 ms. Les deux tranches de 0,5 ms du canal AC comprises dans un intervalle de 20 ms de rang n du canal de contrôle descendant portent quatre bits X₁, X₂, Y₁ et Y₂, protégés par un code de rendement 1/2, dont la signification est par exemple la suivante :
- X₁X₂ = 00 : l'intervalle de 20 ms de rang n+j du canal physique de contrôle montant f_{CU} est indisponible pour les accès aléatoires par les terminaux mobiles (parce qu'il est occupé par un canal dédié alloué Si) ;
- X₁X₂ = 01 : l'intervalle de 20 ms de rang n+j du canal montant f_{CU} est disponible pour des accès aléatoires en mode normal ;
- X₁X₂ = 10 : l'intervalle de 20 ms de rang n+j du canal montant f_{CU} est disponible pour des accès aléatoires en mode protégé (traités différemment de ceux en mode normal) ;
- X₁X₂ = 11 : réservé ;
- Y₁Y₂ = 00 : la station de base indique avoir détecté et correctement traité un accès aléatoire effectué par un terminal mobile pendant l'intervalle de 20 ms de rang n-j' du canal montant f_{CU} ;
- Y₁Y₂ = 01 : la station de base indique avoir détecté un accès aléatoire effectué pendant l'intervalle de 20 ms de rang n-j' du canal montant f_{CU}, sans avoir pu mener à bien le traitement de cet accès aléatoire, pour une raison vraisemblablement distincte d'un problème de collision entre deux accès aléatoires concomitants ;
- Y₁Y₂ = 10 : la station de base indique avoir détecté un accès aléatoire effectué pendant l'intervalle de 20 ms de rang n-j' du canal montant f_{CU}, sans avoir pu mener à bien le traitement de cet accès aléatoire, vraisemblablement pour cause de collision entre deux accès aléatoires concomitants (les terminaux mobiles suivent un protocole de répétition distinct selon qu'il y a eu ou non collision) ;
- Y₁Y₂ = 11 : réservé.
Les nombres positifs j et j' sont par exemple égaux à 3 ou 4.

Dans l'exemple illustré par la figure 11, l'intervalle de temps F, de d₂ = 40 ms est subdivisé en N = 4 sous-intervalles F1, F2, F3, F4, et l'intervalle de temps S0 est subdivisé en N = 4 sous-intervalles correspondants S01, S02, S03, S04. Comme dans le cas des figures 9 et 10, les sous-intervalles de rangs impair F1, F3, S01, S03 commencent par 0,5 ms consacrées au canal de contrôle d'accès AC, et les sous-intervalles de rangs pair F2, F4, S02, S04 se terminent par 0,5 ms consacrées au canal de contrôle d'accès AC. Les sous-intervalles de rang impair F1, F3 sont les intervalles de présynchronisation portant le motif de synchronisation FF, et les sous-intervalles de rang impair S01, S03 sont les intervalles de complément de synchronisation portant les informations système H, X, R et un bit à 0 pour désigner le sous-intervalle S01 et à 1 pour désigner le sous-intervalle S03. Ce bit permet de lever l'ambiguïté de synchronisation résultant de la seule détection du motif FF. Chacun des intervalles de complément de synchronisation S01, S03 est précédé et suivi par un sous-intervalle de d₂/N = 10 ms contenant des informations système supplémentaires notées Z. Ces informations Z sont donc incluses par la station de base dans les sous-intervalles F4, S02 et S04 puisque les intervalles composites F et S0 se succèdent dans cet exemple (p = 1).

Cette façon de procéder est généralisable au cas où N ≥ 4. Elle repose sur l'observation qu'un terminal mobile, même simplifié, capte toujours au moins deux périodes consécutives de 10ms au cours de sa fenêtre de scrutation. Un terminal mobile ayant capté le motif FF dans la première moitié d'une fenêtre de scrutation peut alors récupérer les informations supplémentaires Z dans la seconde moitié de la fenêtre de scrutation suivante (sous-intervalle S02 ou S04), après avoir reçu les informations système dans le sous-intervalle S01 ou S03. Et un terminal mobile ayant capté le motif FF dans la seconde moitié d'une fenêtre de scrutation peut récupérer les informations supplémentaires Z dans la première moitié de la fenêtre de scrutation suivante (sous-intervalle F4 ou S02), avant d'avoir reçu les informations système dans le sous-intervalle S01 ou S03.

On dispose ainsi d'un débit augmenté au titre du canal de contrôle formé par les intervalles S0.

Revenant aux figures 4 et 5, on détaille ci-après la structure des canaux de signalisation associés aux canaux de trafic et partageant les mêmes fréquences porteuses.

Lorsque la station de base est en train d'écouter ce qu'émet le terminal mobile sur la porteuse f_{TU}. elle dispose d un intervalle de temps appartenant à un canal logique de signalisation associé noté DT (« downlink talker ») à la fin du premier tiers de chaque trame sur la porteuse f_{TD}. Le canal DT porte de la signalisation descendante qui peut notamment se rapporter au contrôle de la puissance d'émission par le terminal mobile (mesures de puissance effectuées par la station de base et permettant au terminal en phase d'émission de réguler sa puissance de manière a limiter les interférences dans l'ensemble du réseau), aux indications de communications concernant le terminal en phase d'émission, ou encore à des ordres de cessation de transmission (par exemple en cas de préemption du canal de trafic par un terminal plus prioritaire).

Lorsque la station de base est en train démettre vers un terminal mobile sur la porteuse f_{TD} elle dispose d un intervalle de temps appartenant à un canal logique de signalisation associé note DL (« downlink listener ») à la fin du second tiers de chaque trame sur la porteuse f_{TD}. Le canal DL porte de la signalisation descendante qui peut notamment se rapporter à l'identification (codes de couleur) des cellules voisines dans lesquelles est établie la communication de groupe (permettant aux terminaux en phase de réception de choisir une nouvelle cellule si les conditions de réception se dégradent), aux indications de communications concernant le terminal en phase d'émission, ou encore à la transmission de l'identité du locuteur ou de paramètres servant au déchiffrement des signaux transmis sur le canal de trafic.

Lorsque le terminal mobile est en train d'écouter ce qu'émet la station de base sur la porteuse f_{TD}, il dispose d un intervalle de temps appartenant à un canal logique de signalisation associé noté UL (« uplink listener ») à la fin du premier tiers de chaque trame sur la porteuse f_{TU}. Le canal UL porte de la signalisation montante qui peut notamment se rapporter à des accès aléatoires du terminal pour demander le droit à l'alternat, ou encore à des réponses à des requêtes faites par la station de base (sur le canal logique DL) pour contrôler la présence des terminaux.

Lorsque le terminal mobile est en train d'émettre vers une station de base sur la porteuse f_{TU}, il dispose d'un intervalle de temps appartenant à un canal logique de signalisation associé noté UT (« uplink talker ») à la fin de la seconde partie de chaque trame à la fréquence f_{TU}. Le canal UT porte de la signalisation montante qui peut notamment se rapporter à des demandes de changement de cellule si le terminal constate une dégradation des conditions radio d'après les mesures envoyées par la station de base sur le canal logique DT ou celles faites par le terminal, ou encore une demande de changement de type de transmission (par exemple de phonie à données).

Bien entendu, les différents éléments de signalisation échangés sur les canaux DT, DL, UL et UT ne sont pas limités à ceux cités ci-dessus à titre d'exemple.

Les intervalles de temps appartenant aux canaux associés DT, DL, UL, UT sont des intervalles élémentaires dans le mode 1 (figure 4), et des intervalles composites dans le mode 2 (figure 5).

Comme le montre la figure 4, les intervalles élémentaires relevant des canaux logiques DT et UL sont permutés au sein de leur intervalle composite dans le mode 1. Les intervalles élémentaires relevant des canaux logiques DT et UL sont respectivement pair et impair, c'est-à-dire que celui du canal montant UL intervient avant celui du canal descendant DT, alors que c'est l'inverse dans les intervalles composites relevant des canaux de trafic descendant et montant. Cette disposition permet aux terminaux simplifiés, auxquels il faut quelques millisecondes pour changer de fréquence, d'accéder à la totalité des intervalles DT et UL de 20 ms.

Bien entendu, si les intervalles élémentaires impairs sont réservés au sens montant et les pairs au sens descendant dans les canaux logiques de trafic, on prévoira, pour obtenir le même résultat, que les intervalles élémentaires impairs soient réservés au sens descendant et les pairs au sens montant dans les canaux logiques de signalisation DT et UL.

En ce qui concerne les intervalles DL et UT, qui ne nécessitent pas de changement de fréquence des terminaux mobiles, la permutation des intervalles élémentaires au sein de l'intervalle composite qui les contient est facultative dans le mode 1.

Il est à noter que, dans le mode 1 avec duplex temporel, il n'y a pas de distinction entre les canaux DT et DL, ni entre les canaux UT et UL, puisque le terminal est simultanément en phase d'émission et en phase de réception sur le canal de trafic duplex.

Dans le mode 2 (figure 5), les intervalles relevant des canaux de signalisation associés DT, UL, DL, UT sont des intervalles composites. La gestion des canaux DL et UT ne pose pas de problème particulier puisque (i) ils ne requièrent pas de changement de fréquence des terminaux mobiles, et (ii) seul le terminal mobile émetteur est susceptible d'employer le canal UT.

Pour indiquer le neuvième intervalle de temps de durée d₂ d'une trame sera consacré au canal descendant DT ou au canal montant UL, la station de base utilise un mécanisme de bits de contrôle X₁, X₂, Y₁, Y₂ semblable à celui précédemment décrit. La station de base est alors en train d'émettre sur le canal de trafic de la porteuse f_{TD}, de sorte qu'elle peut placer les bits X₁, X₂, Y₁, Y₂ dans les intervalles de temps du canal de trafic pour contrôler l'accès au neuvième intervalle de temps composite.

Par exemple, les bits X₁, X₂ placés dans le sixième intervalle de temps de la trame (cas j = 3) indiqueront si les mobiles sont autorisés ou non à effectuer des accès aléatoires, c'est-à-dire si le neuvième intervalle appartient à un canal de signalisation montant (UL) ou descendant (DT ou DL), et les bits Y₁, Y₂ placés dans le douzième intervalle de temps de la trame (cas j' = 3) rendront compte du traitement des accès aléatoires effectués le cas échéant dans l'intervalle UL précédent. Le codage des bits de contrôle X₁, X₂, Y₁, Y₂ peut être le même que précédemment.

Le neuvième intervalle de temps composite de la trame est donc programmable par la station de base. Selon les besoins, elle l'affectera soit au canal montant UL soit à un canal descendant. Il est à noter que, lorsqu'il est affecté à un canal descendant, les informations transmises au cours de cet intervalle peuvent concerner à la fois les terminaux en phase d'émission (canal DT) et ceux en phase de réception (canal DL). Ceci vaut pour le mode 2 comme il vient d'être exposé, mais aussi pour le mode 1 : un terminal simplifié ne peut pas commuter sa fréquence immédiatement entre les intervalles élémentaires notés UL et DT sur la figure 4, de sorte qu'il est utile que la station de base lui indique si le neuvième intervalle servira à la transmission de signalisation descendante (sur le canal logique DL empruntant l'intervalle noté DT) ou à la transmission éventuelle de signalisation montante (sur le canal UL).

Il est très avantageux que la station de base ait la possibilité d'augmenter de façon programmable le débit global du canal logique DL au détriment de celui du canal logique UL. Cela permet une bonne adaptation aux besoins rencontrés dans les communications de trafic en mode d'alternat, c'est-à-dire avec des alternances successives au cours desquelles un seul des terminaux mobiles est en phase d'émission sur le canal logique de trafic montant alors qu'un ou plusieurs des terminaux mobiles sont en phase de réception sur le canal logique de trafic descendant.

La station de base peut ainsi émettre des bits de contrôle d'accès X₁, X₂ propres à restreindre les possibilités d'accès aléatoire par les terminaux mobiles au début d'une alternance (réduction du débit global du canal UL) que dans la suite de l'alternance. En effet, il est peu intéressant d'autoriser une nouvelle requête de préemption d'alternat peu de temps après un changement de locuteur, alors qu'en revanche la transmission d'informations sur le canal descendant DL présente un intérêt particulier à ces moments-là. L'affectation d'intervalles supplémentaires au canal DL en début de période d'alternance permet ainsi de transmettre de façon aussi fréquente que possible des informations telles que l'identité du locuteur ou, dans le cas d'un système de chiffrement à synchronisation externe, le vecteur d'initialisation du système de déchiffrement. On répond ainsi aux problèmes liés aux effacements dus aux mauvaises conditions de propagation radio. On augmente également l'efficacité et le confort pour l'utilisateur de la fonction d'entrée tardive dans une communication de groupe.

Pour la régularité de la structure des intervalles de temps, les bits de contrôle X₁, X₂, Y₁, Y₂ peuvent être insérés dans chacun des intervalles de temps de la trame de trafic sur la porteuse f_{TD} (comme dans le cas de la trame de contrôle sur la porteuse f_{CD}), même si certains seulement d'entre eux suffisent au codage de l'affectation du neuvième intervalle composite.

## Revendications

1. Procédé de transmission de signaux radio entre une station de base et des terminaux mobiles, sur une première fréquence (f_{TD}) pour des signaux transmis de la station de base vers au moins un des terminaux mobiles et sur une seconde fréquence (f_{TU}) pour des signaux transmis d'au moins un des terminaux mobiles vers la station de base, les transmissions sur les première et seconde fréquences étant effectuées suivant une structure de trame comportant des intervalles de temps de même durée, dans lequel la première fréquence (f_{TD}) supporte un canal logique de trafic descendant vers au moins un des terminaux mobiles, la seconde fréquence (f_{TU}) supporte un canal logique de trafic montant depuis un des terminaux mobiles, la première fréquence (f_{TD}) supporte en outre un premier canal logique de signalisation descendante (DT) vers un des terminaux mobiles en phase d'émission sur le canal logique de trafic montant, et un second canal logique de signalisation descendante (DL) vers au moins un des terminaux mobiles en phase de réception sur le canal logique de trafic descendant, et dans lequel la seconde fréquence (f_{TU}) supporte en outre un premier canal logique de signalisation montante (UL) depuis au moins un des terminaux mobiles en phase de réception sur le canal logique de trafic descendant, et un second canal logique de signalisation montante (UT) depuis un des terminaux mobiles en phase d'émission sur le canal logique de trafic montant, **caractérisé en ce que** les premiers canaux logiques de signalisation descendante et montante (DT, UL) sont chacun supportés par un premier intervalle de temps de la structure de trame, tandis que les seconds canaux logiques de signalisation descendante et montante (DL, UT) occupent chacun un second intervalle de temps de la structure de trame, distinct dudit premier intervalle.

2. Procédé selon la revendication 1, dans lequel la structure de trame comprend, en plus desdits premier et second intervalles de temps, des intervalles de temps (T) consacrés aux canaux logiques de trafic, et au moins un intervalle de temps formant pour les terminaux mobiles une fenêtre d'écoute de signaux transmis depuis d'autres stations de base.

3. Procédé selon la revendication 2, dans lequel les signaux transmis depuis d'autres stations de base et recherchés par les terminaux mobiles pendant la fenêtre d'écoute comprennent des motifs de synchronisation (FF) émis avec une périodicité de M fois ladite durée des intervalles de temps, M étant un nombre premier avec le nombre (Q) des intervalles de temps de la structure de trame.

4. Procédé selon la revendication 2 ou 3, dans lequel chacun des intervalles de temps consacrés aux canaux logiques de trafic comporte un premier intervalle élémentaire pour le canal logique de trafic descendant suivi par un second intervalle élémentaire pour le canal logique de trafic montant, et dans lequel le premier intervalle de temps comporte un premier intervalle élémentaire pour le premier canal logique de signalisation montante (UL) suivi par un second intervalle élémentaire pour le premier canal logique de signalisation descendante (DT).

5. Procédé selon la revendication 2 ou 3, dans lequel chacun des intervalles de temps consacrés aux canaux logiques de trafic comporte un premier intervalle élémentaire pour le canal logique de trafic montant suivi par un second intervalle élémentaire pour le canal logique de trafic descendant, et dans lequel le premier intervalle de temps comporte un premier intervalle élémentaire pour le premier canal logique de signalisation descendante (DT) suivi par un second intervalle élémentaire pour le premier canal logique de signalisation montante (UL).

6. Procédé selon la revendication 4 ou 5, dans lequel le second intervalle de temps comporte respectivement deux intervalles élémentaires pour les seconds canaux logiques de signalisation descendante et montante (DL, UT).

7. Procédé selon l'une quelconque des revendications 2 à 6, dans lequel la structure de trame comprend un intervalle de temps programmable prévu pour la transmission sur au moins le premier canal logique de signalisation montante (UL), et dans lequel la station de base émet, au cours des intervalles de temps consacrés aux canaux logiques de trafic, des signaux (X₁, X₂, Y₁, Y₂) de contrôle d'accès audit intervalle de temps programmable par les terminaux mobiles en phase de réception.

8. Procédé selon la revendication 7, dans lequel lesdits signaux de contrôle d'accès comprennent des signaux (X₁, X₂) pour autoriser les terminaux mobiles en phase de réception à émettre au cours d'un prochain intervalle de temps programmable, et des signaux (Y₁, Y₂) pour rendre compte du traitement de requêtes effectuées par les terminaux mobiles en phase de réception au cours d'un précédent intervalle de temps programmable.

9. Procédé selon la revendication 7 ou 8, dans lequel au moins un intervalle de temps programmable, au cours duquel les terminaux mobiles en phase de réception ne sont pas autorisés à émettre, est affecté au premier canal logique de signalisation descendante (DT).

10. Procédé selon l'une quelconque des revendications 7 à 9, dans lequel au moins un intervalle de temps programmable, au cours duquel les terminaux mobiles en phase de réception ne sont pas autorisés à émettre, est affecté au second canal logique de signalisation descendante (DL).

11. Procédé selon l'une quelconque des revendications 7 à 10, dans lequel les canaux logiques de trafic sont utilisés en mode d'alternat, avec des alternances successives au cours desquelles un seul des terminaux mobiles est en phase d'émission sur le canal logique de trafic montant alors qu'un ou plusieurs des terminaux mobiles sont en phase de réception sur le canal logique de trafic descendant, et dans lequel la station de base émet des signaux de contrôle d'accès de manière à restreindre les émissions des terminaux mobiles au cours des intervalles de temps programmables dans une période initiale d'une alternance par rapport à la suite de l'alternance.

12. Station de base de radiocommunication, comprenant des moyens (40, 41) d'émission de signaux radio sur une première fréquence (f_{TD}) vers au moins un terminal mobile, et des moyens (50, 40) de réception de signaux radio sur une seconde fréquence (f_{TU}) depuis au moins un terminal mobile, les transmissions sur les première et seconde fréquences étant effectuées suivant une structure de trame comportant des intervalles de temps de même durée, dans laquelle la première fréquence (f_{TD}) supporte un canal logique de trafic descendant depuis la station de base, dans laquelle la seconde fréquence (f_{TU}) supporte un canal logique de trafic montant vers la station de base, dans laquelle la première fréquence (f_{TD}) supporte en outre un premier canal logique de signalisation descendante (DT) vers un terminal mobile en phase d'émission sur le canal logique de trafic montant, et un second canal logique de signalisation descendante (DL) vers au moins un terminal mobile en phase de réception sur le canal logique de trafic descendant, et dans laquelle la seconde fréquence (f_{TU}) supporte en outre un premier canal logique de signalisation montante (UL) depuis au moins un terminal mobile en phase de réception sur le canal logique de trafic descendant, et un second canal logique de signalisation montante (UT) depuis un terminal mobile en phase d'émission sur le canal logique de trafic montant **caractérisée en ce que** les premiers canaux logiques de signalisation descendante et montante (DT, UL) sont chacun supportés par un premier intervalle de temps de la structure de trame, tandis que les seconds canaux logiques de signalisation descendante et montante (DL, UT) occupent chacun un second intervalle de temps de la structure de trame, distinct dudit premier intervalle

13. Terminal mobile de radiocommunication, comprenant des moyens (59, 71) de réception de signaux radio sur une première fréquence (f_{TD}) depuis une station de base, et des moyens (71, 72) démission de signaux radio sur une seconde fréquence (f_{TU}) vers la station de base, les transmissions sur les première et seconde fréquences etant effectuées suivant une structure de trame comportant des intervalles de temps de même durée, dans lequel la première fréquence (f_{TD}) supporte un canal logique de trafic descendant vers le terminal mobile, dans lequel la seconde frequence (f_{TU}) supporte un canal logique de trafic montant depuis le terminal mobile, dans lequel la première fréquence (f_{TD}) supporte en outre un premier canal logique de signalisation descendante (DT) vers le terminal mobile lorsqu'il est en phase d'émission sur le canal logique de trafic montant et un second canal logique de signalisation descendante (DL) vers le terminal mobile lorsqu'il est en phase de réception sur le canal logique de trafic descendant. et dans lequel la seconde fréquence (f_{TU}) supporte en outre un premier canal logique de signalisation montante (UL) depuis le terminal mobile lorsqu'il est en phase de réception sur le canal logique de trafic descendant, et un second canal logique de signalisation montante (UT) depuis le terminal mobile lorsqu'il est en phase d'émission sur le canal logique de trafic montant, **caractérisé en ce que** les premiers canaux logiques de signalisation descendante et montante (DT, UL) sont chacun supportés par un premier intervalle de temps de la structure de trame, tandis que les seconds canaux logiques de signalisation descendante et montante (DL, UT) occupent chacun un second intervalle de temps de la structure de trame, distinct dudit premier intervalle.

## Patentansprüche

1. Verfahren zur Übertragung von Funksignalen zwischen einer Basisstation und mobilen Endgeräten auf einer ersten Frequenz (f_{TD}) bei den von der Basisstation zu mindestens einem der mobilen Endgeräte übertragenen Signalen und auf einer zweiten Frequenz (f_{TU}) bei den von mindestens einem der mobilen Endgeräten zu der Basisstation übertragenen Signalen, wobei die Übertragungen auf der ersten und der zweiten Frequenz gemäß einer Rasterstruktur mit Zeitintervallen von gleicher Dauer vorgenommen werden, bei welchem die erste Frequenz (f_{TD}) einen logischen Verkehrskanal unterstützt, welcher abwärts zu mindestens einem der mobilen Endgeräte führt, die zweite Frequenz (f_{TU}) einen logischen Verkehrskanal unterstützt, welcher aufwärts von einem der mobilen Endgeräte führt, die erste Frequenz (f_{TD}) des Weiteren einen ersten logischen Kanal zur Nachrichtenübermittlung (DT) unterstützt, welcher abwärts zu einem der mobilen Endgeräte in der Phase führt, in welcher auf dem aufwärts gerichteten logischen Verkehrskanal ausgesendet wird, und einen zweiten logischen Kanal zur Nachrichtenübermittlung (DL) unterstützt, welcher abwärts zu mindestens einem der mobilen Endgeräte in der Phase führt, in welcher auf dem abwärts gerichteten logischen Verkehrskanal empfangen wird, und bei welchem die zweite Frequenz (f_{TU}) außerdem einen ersten logischen Kanal zur Nachrichtenübermittlung (UL) unterstützt, welcher aufwärts von mindestens einem der mobilen Endgeräte in der Phase führt, in welcher auf dem abwärts gerichteten logischen Verkehrskanal empfangen wird, sowie einen zweiten logischen Kanal zur Nachrichtenübermittlung (UT) unterstützt, welcher von einem der mobilen Endgeräte aufwärts in der Phase führt, in welcher auf dem aufwärts gerichteten logischen Verkehrskanal gesendet wird, **dadurch gekennzeichnet, dass** der erste absteigende und der erste aufsteigende logische Kanal zur Nachrichtenübermittlung (DT, UL) jeweils von einem ersten Zeitintervall der Rasterstruktur unterstützt werden, wohingegen der zweite abwärts führende und der zweite aufwärts führende logische Kanal zur Nachrichtenübermittlung (DL, UT) jeweils ein zweites Zeitintervall in der Rasterstruktur belegen, das von dem ersten Intervall verschieden ist.

2. Verfahren nach Anspruch 1, bei welchem die Rasterstruktur zusätzlich zu dem ersten und zweiten Zeitintervall Zeitintervalle (T) umfasst, welche den logischen Verkehrskanälen zugeordnet sind, und mindestens ein Zeitintervall, welches für die mobilen Endgeräte ein Fenster zum Abhören von Signalen bildet, welche von anderen Basisstationen übertragen werden.

3. Verfahren nach Anspruch 2, bei welchem die von anderen Basisstationen aus übertragenen Signale, welche von den mobilen Endgeräten während des Abhörfensters ermittelt werden, Synchronisationsmuster (FF) umfassten, welche mit einer Periodizität übertragen werden, die M mal größer als die Dauer der Zeitintervalle ist, wobei M eine Primzahl mit der Anzahl (Q) von Zeitintervallen der Rasterstruktur ist.

4. Verfahren nach Anspruch 2 oder 3, bei welchem jedes der Zeitintervalle, die den logischen Verkehrskanälen zugeordnet sind, ein erstes elementares Zeitintervall für den abwärts gerichteten logischen Verkehrskanal umfasst, an das sich ein zweites elementares Zeitintervall für den aufwärts gerichteten logischen Verkehrskanal anschließt, und bei welchem das erste Zeitintervall ein erstes elementares Zeitintervall für den ersten aufwärts gerichteten logischen Kanal zur Nachrichtenübermittlung (UL) umfasst, an das sich ein zweites elementares Zeitintervall für den ersten abwärts gerichteten logischen Kanal zur Nachrichtenübermittlung (DT) anschließt.

5. Verfahren nach Anspruch 2 oder 3, bei welchem jedes der Zeitintervalle, die den logischen Verkehrskanälen zugeordnet sind, ein erstes elementares Zeitintervall für den aufwärts gerichteten logischen Verkehrskanal umfasst, an das sich ein zweites elementares Zeitintervall für den abwärts gerichteten logischen Verkehrskanal anschließt, und bei welchem das erste Zeitintervall ein erstes elementares Zeitintervall für den ersten abwärts gerichteten logischen Kanal zur Nachrichtenübermittlung (DT) umfasst, an das sich ein zweites elementares Zeitintervall für den ersten aufwärts gerichteten logischen Kanal zur Nachrichtenübermittlung (UL) anschließt.

6. Verfahren nach Anspruch 4 oder 5, bei welchem das zweite Zeitintervall jeweils zwei elementare Zeitintervalle für den zweiten abwärts gerichteten und den zweiten aufwärts gerichteten logischen Kanal zur Nachrichtenübermittlung (DL, UT) umfasst.

7. Verfahren nach einem der Ansprüche 2 bis 6, bei welchem die Rasterstruktur ein programmierbares Zeitintervall umfasst, welches für die Übertragung mindestens auf dem ersten aufwärts gerichteten logischen Kanal zur Nachrichtenübermittlung (UL) vorgesehen ist, und bei welchem die Basisstation während der Zeitintervalle, die den logischen Verkehrskanälen zugeordnet sind, Signale (X₁, X₂, Y₁, Y₂) zur Steuerung des Zugangs der mobilen Endgeräte in der Empfangsphase zu dem programmierbaren Zeitintervall aussendet.

8. Verfahren nach Anspruch 7, bei welchem die Signale zur Zugangssteuerung Signale (X₁, X₂) zur Zugangsfreigabe für die mobilen Endgeräte in der Empfangsphase umfassen, die während eines nächsten programmierbaren Zeitintervalls auszusenden sind, sowie Signale (Y₁, Y₂) zur Berichterstattung über die Bearbeitung von Anforderungen, die von den mobilen Endgeräten in der Empfangsphase während eines vorhergehenden programmierbaren Zeitintervalls ausgesendet wurden.

9. Verfahren nach Anspruch 7 oder 8, bei welchem mindestens ein programmierbares Zeitintervall, während dessen die mobilen Endgeräte, die sich in der Empfangsphase befinden, nicht zum Senden freigegeben sind, dem ersten abwärts gerichteten logischen Kanal zur Nachrichtenübermittlung (DT) zugeordnet ist.

10. Verfahren nach einem der Ansprüche 7 bis 9, bei welchem mindestens ein programmierbares Zeitintervall, während dessen die mobilen Endgeräte, die sich in der Empfangsphase befinden, nicht zum Senden freigegeben sind, dem zweiten abwärts gerichteten logischen Kanal zur Nachrichtenübermittlung (DL) zugeordnet ist.

11. Verfahren nach einem der Ansprüche 7 bis 10, bei welchem die logischen Verkehrskanäle in abwechselndem Modus mit auf einander folgenden Wechselfolgen eingesetzt werden, in deren Verlauf sich nur ein einziges der mobilen Endgeräte in Sendephase auf dem aufsteigenden logischen Verkehrskanal befindet, wohingegen ein oder mehrere mobile Endgeräte sich auf dem abwärts führenden logischen Verkehrskanal in Empfangsphase befinden, und bei welchem die Basisstation Signale zur Zugangssteuerung in der Weise aussendet, dass die Sendevorgänge der mobilen Endgeräte während der programmierbaren Zeitintervalle in einer Anfangsperiode einer Wechselfolge bezüglich der Abfolge der Wechselfolge beschränkt werden.

12. Basisstation für den Funkverkehr, welche Einrichtungen (40, 41) zum Aussenden von Funksignalen auf einer ersten Frequenz (f_{TD}) zu mindestens einem mobilen Endgerät und Einrichtungen (50, 40) zum Empfangen von Funksignalen auf einer zweiten Frequenz (f_{TU}) von mindestens einem mobilen Endgerät aufweist, wobei die Übertragungen auf der ersten und der zweiten Frequenz entsprechend einer Rasterstruktur erfolgen, welche Zeitintervalle von gleicher Dauer umfasst, bei welcher die erste Frequenz (f_{TD}) einen von der Basisstation aus abwärts gerichteten logischen Verkehrskanal unterstützt, bei welcher die zweite Frequenz (f_{TU}) einen zur Basisstation hin gerichteten logischen Verkehrskanal unterstützt, bei welcher die erste Frequenz (f_{TD}) darüber hinaus einen ersten abwärts gerichteten logischen Kanal zur Nachrichtenübermittlung (DT) zu einem mobilen Endgerät unterstützt, das sich auf dem aufwärts gerichteten logischen Verkehrskanal in Sendephase befindet, sowie einen zweiten abwärts gerichteten logischen Kanal zur Nachrichtenübermittlung (DL) zu mindestens einem mobilen Endgerät unterstützt, welches sich auf dem abwärts gerichteten logischen Verkehrskanal in Empfangsphase befindet, und bei welcher die zweite Frequenz (f_{TU}) außerdem einen ersten aufwärts gerichteten logischen Kanal zur Nachrichtenübermittlung (UL) von mindestens einem mobilen Endgerät aus unterstützt, das sich auf dem abwärts gerichteten logischen Verkehrskanal in Empfangsphase befindet, sowie einen zweiten aufwärts gerichteten logischen Kanal zur Nachrichtenübermittlung (UT) von einem mobilen Endgerät aus, das sich auf dem aufwärts gerichteten logischen Verkehrskanal in Sendephase befindet, **dadurch gekennzeichnet, dass** der erste abwärts gerichtete und der erste aufwärts gerichtete logische Kanal zur Nachrichtenübermittlung (DT, UL) jeweils von einem ersten Zeitintervall der Rasterstruktur unterstützt werden, wohingegen der zweite abwärts gerichtete und der zweite aufwärts gerichtete logische Kanal zur Nachrichtenübermittlung (DL, UT) jeweils ein zweites Zeitintervall der Rasterstruktur belegen, das von dem ersten Zeitintervall verschieden ist.

13. Mobiles Endgerät für den Funkverkehr, welche Einrichtungen (59, 71) zum Empfangen von Funksignalen auf einer ersten Frequenz (f_{TD}) von einer Basisstation und Einrichtungen (71, 72) zum Aussenden von Funksignalen auf einer zweiten Frequenz (f_{TU}) zu der Basisstation aufweist, wobei die Übertragungen auf der ersten und der zweiten Frequenz entsprechend einer Rasterstruktur erfolgen, welche Zeitintervalle von gleicher Dauer umfasst, bei welchem die erste Frequenz (f_{TD}) einen zu dem mobilen Endgerät abwärts gerichteten logischen Verkehrskanal unterstützt, bei welchem die zweite Frequenz (f_{TU}) einen von dem mobilen Endgerät aus aufwärts gerichteten logischen Verkehrskanal unterstützt, bei welchem die erste Frequenz (f_{TD}) darüber hinaus einen ersten abwärts gerichteten logischen Kanal zur Nachrichtenübermittlung (DT) zu einem mobilen Endgerät hin unterstützt, wenn sich dieses auf dem aufwärts gerichteten logischen Verkehrskanal in Sendephase befindet, sowie einen zweiten abwärts gerichteten logischen Kanal zur Nachrichtenübermittlung (DL) zu dem mobilen Endgerät hin unterstützt, wenn sich dieses auf dem abwärts gerichteten logischen Verkehrskanal in Empfangsphase befindet, und bei welchem die zweite Frequenz (f_{TU}) außerdem einen ersten aufwärts gerichteten logischen Kanal zur Nachrichtenübermittlung (UL) von dem mobilen Endgerät aus unterstützt, wenn sich dieses auf dem abwärts gerichteten logischen Verkehrskanal in Empfangsphase befindet, sowie einen zweiten aufwärts gerichteten logischen Kanal zur Nachrichtenübermittlung (UT) von dem mobilen Endgerät aus unterstütz, wenn sich dieses auf dem aufwärts gerichteten logischen Empfangskanal in Sendephase befindet, **dadurch gekennzeichnet, dass** der erste abwärts gerichtete und der erste aufwärts gerichtete logische Kanal zur Nachrichtenübermittlung (DT, UL) jeweils von einem ersten Zeitintervall der Rasterstruktur unterstützt werden, wohingegen der zweite abwärts gerichtete und der zweite aufwärts gerichtete logische Kanal zur Nachrichtenübermittlung (DL, UT) jeweils ein zweites Zeitintervall der Rasterstruktur belegen, das von dem ersten Zeitintervall verschieden ist.

## Claims

1. A method of transmitting radio signals between a base station and mobile terminals, on a first frequency (f_{TD}) for signals transmitted from the base station to at least one of the mobile terminals and on a second frequency (f_{TU}) for signals transmitted from at least one of the mobile terminals to the base station, the transmissions on the first and second frequencies being performed according to a frame structure comprising timeslots of like duration, in which the first frequency (f_{TD}) carries a downlink logical traffic channel to at least one of the mobile terminals, the second frequency (f_{TU}) carries an uplink logical traffic channel from one of the mobile terminals, the first frequency (f_{TD}) furthermore carries a first downlink logical signaling channel (DT) to one of the mobile terminals in the transmission phase on the uplink logical traffic channel, and a second downlink logical signaling channel (DL) to at least one of the mobile terminals in the reception phase on the downlink logical traffic channel, and in which the second frequency (f_{TU}) furthermore carries a first uplink logical signaling channel (UL) from at least one of the mobile terminals in the reception phase on the downlink logical traffic channel and a second uplink logical signaling channel (UT) from one of the mobile terminals in the transmission phase on the uplink logical traffic channel, **characterized in that** the first downlink and uplink logical signaling channels (DT, UL) are each carried by a first timeslot of the frame structure, while the second downlink and uplink logical signaling channels (DL, UT) each occupy a second timeslot of the frame structure, distinct from said first timeslot.

2. The method as claimed in claim 1, in which the frame structure comprises, in addition to said first and second timeslots, timeslots. (T) dedicated to the logical traffic channels, and at least one timeslot forming for the mobile terminals a window for listening to signals transmitted from other base stations.

3. The method as claimed in claim 2, in which the signals transmitted from other base stations and searched for by the mobile terminals during the listening window comprise synchronization patterns (FF) transmitted with a periodicity of M times said duration of the timeslots, M being a number prime to the number (Q) of timeslots of the frame structure.

4. The method as claimed in claim 2 or 3, in which each of the timeslots dedicated to the logical traffic channels comprises a first elementary timeslot for the downlink logical traffic channel followed by a second elementary timeslot for the uplink logical traffic channel, and in which the first timeslot comprises a first elementary timeslot for the first uplink logical signaling channel (UL) followed by a second elementary timeslot for the first downlink logical signaling channel (DT).

5. The method as claimed in claim 2 or 3, in which each of the timeslots dedicated to the logical traffic channels comprises a first elementary timeslot for the uplink logical traffic channel followed by a second elementary timeslot for the downlink logical traffic channel, and in which the first timeslot comprises a first elementary timeslot for the first downlink logical signaling channel (DT) followed by a second elementary timeslot for the first uplink logical signaling channel (UL).

6. The method as claimed in claim 4 or 5, in which the second timeslot respectively comprises two elementary timeslots for the second downlink and uplink logical signaling channels (DL, UT).

7. The method as claimed in one of claims 2 to 6, in which the frame structure comprises a programmable timeslot scheduled for the transmission on at least the first uplink logical signaling channel (UL), and in which the base station transmits, in the course of the timeslots dedicated to the logical traffic channels, signals (X₁, X₂, Y₁, Y₂) for controlling access to said programmable timeslot by the mobile terminals in the reception phase.

8. The method as claimed in claim 7, in which said access control signals comprise signals (X₁, X₂) for authorizing the mobile terminals in the reception phase to transmit in the course of a next programmable timeslot, and signals (Y₁, Y₂) for apprising of the processing of requests made by the mobile terminals in the reception phase in the course of a previous programmable timeslot.

9. The method as claimed in claim 7 or 8, in which at least one programmable timeslot, in the course of which the mobile terminals in the reception phase are not authorized to transmit, is assigned to the first downlink logical signaling channel (DT).

10. The method as claimed in any one of claims 7 to 9, in which at least one programmable timeslot, in the course of which the mobile terminals in the reception phase are not authorized to transmit, is assigned to the second downlink logical signaling channel (DL).

11. The method as claimed in any one of claims 7 to 10, in which the logical traffic channels are used in alternate mode, with successive alternations in the course of which only one of the mobile terminals is in the transmission phase on the uplink logical traffic channel while one or more of the mobile terminals are in the reception phase on the downlink logical traffic channel, and in which the base station transmits access control signals in such a way as to restrict the transmissions of the mobile terminals in the course of the programmable timeslots in an initial period of an alternation with respect to the rest of the alternation.

12. A radiocommunication base station, comprising means (40, 41) for transmitting radio signals on a first frequency (f_{TD}) to at least one mobile terminal, and means (50, 40) for receiving radio signals on a second frequency (f_{TU}) from at least one mobile terminal, the transmissions on the first and second frequencies being performed according to a frame structure comprising timeslots of like duration, in which the first frequency (f_{TD}) carries a downlink logical traffic channel from the base station, in which the second frequency (f_{TU}) carries an uplink logical traffic channel to the base station, in which the first frequency (f_{TD}) furthermore carries a first downlink logical signaling channel (DT) to a mobile terminal in the transmission phase on the uplink logical traffic channel, and a second downlink logical signaling channel (DL) to at least one mobile terminal in the reception phase on the downlink logical traffic channel, and in which the second frequency (f_{TU}) furthermore carries a first uplink logical signaling channel (UL) from at least one mobile terminal in the reception phase on the downlink logical traffic channel and a second uplink logical signaling channel (UT) from a mobile terminal in the transmission phase on the uplink logical traffic channel, **characterized in that** the first downlink and uplink logical signaling channels (DT, UL) are each carried by a first timeslot of the frame structure, while the second downlink and uplink logical signaling channels (DL, UT) each occupy a second timeslot of the frame structure, distinct from said first timeslot.

13. A radiocommunication mobile terminal, comprising means (59, 71) for receiving radio signals on a first frequency (f_{TD}) from a base station, and means (71, 72) for transmitting radio signals on a second frequency (f_{TU}) to the base station, the transmissions on the first and second frequencies being performed according to a frame structure comprising timeslots of like duration, in which the first frequency (f_{TD}) carries a downlink logical traffic channel to the mobile terminal, in which the second frequency (f_{TU}) carries an uplink logical traffic channel from the mobile terminal, in which the first frequency (f_{TD}) furthermore carries a first downlink logical signaling channel (DT) to the mobile terminal when it is in the transmission phase on the uplink logical traffic channel, and a second downlink logical signaling channel (DL) to the mobile terminal when it is in the reception phase on the downlink logical traffic channel, and in which the second frequency (f_{TU}) furthermore carries a first uplink logical signaling channel (UL) from the mobile terminal when it is in the reception phase on the downlink logical traffic channel and a second uplink logical signaling channel (UT) from the mobile terminal when it is in the transmission phase on the uplink logical traffic channel, **characterized in that** the first downlink and uplink logical signaling channels (DT, UL) are each carried by a first timeslot of the frame structure, while the second downlink and uplink logical signaling channels (DL, UT) each occupy a second timeslot of the frame structure, distinct from said first timeslot.
